# EUROPEAN PATENT SPECIFICATION

(11) **EP 3 812 954 B1**
(45) Date of publication and mention of the grant of the patent: **03.09.2025**
(21) Application number: 19204278.6
(22) Date of filing: 21.10.2019
(51) Int. Cl.: G06V 20/58, G01S 7/00, G01S 7/40, G01S 7/41, G01S 7/48, G01S 7/497, G01S 7/52, G01S 7/539, G01S 13/86, G01S 13/87, G01S 13/931, G01S 15/87, G01S 15/931, G01S 17/86, G01S 17/87, G01S 17/931

(54) **PERFORMANCE MONITORING AND EVALUATION OF A VEHICLE ADAS OR AUTONOMOUS DRIVING FEATURE**
LEISTUNGSÜBERWACHUNG UND BEURTEILUNG EINES FAHRZEUG-ADAS ODER AUTONOMEN FAHRMERKMALS
SURVEILLANCE ET ÉVALUATION DES PERFORMANCES D'UNE CARACTÉRISTIQUE ADAS OU DE CONDUITE AUTONOME D'UN VÉHICULE

(43) Date of publication of application: 28.04.2021
(73) Proprietor: Zenuity AB, 417 56 Göteborg (SE)
(72) Inventor: GYLLENHAMMAR, Magnus, 435 43 Pixbo (SE); ZANDÉN, Carl, 437 38 Lindome (SE)
(74) Representative: Valea AB

(56) References cited:
- EP-A1- 2 615 598
- EP-A1- 3 361 466
- US-A1- 2018 261 095
- US-A1- 2018 374 359
- CLAUSEN PHILIPP ET AL: "Assessment of positioning accuracy of vehicle trajectories for different road applications", IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK, vol. 11, no. 3, 1 April 2017 (2017-04-01), pages 113 - 125, XP006061375, ISSN: 1751-956X, DOI: 10.1049/IET-ITS.2016.0049

## Description

### TECHNICAL FIELD

The present disclosure relates to performance monitoring and evaluation of an ADAS or autonomous driving feature of a vehicle.

### BACKGROUND

An increasing number of modern vehicles have advanced driver-assistance systems, ADAS, to increase vehicle safety and more generally road safety. ADAS - which for instance may be represented by adaptive cruise control, ACC, collision avoidance system, forward collision warning, etc. - are electronic systems that may aid a vehicle driver while driving. To function as intended, ADAS may rely on inputs from multiple data sources, such as e.g. automotive imaging, LIDAR, radar, image processing, computer vision, and/or in-car networking.

Moreover, in a not too distant future, autonomous or automated driving systems, ADSs, will to greater extent find their way into modern vehicles. An ADS is a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all responsibilities to the system. An ADS commonly combines a variety of sensors to perceive the vehicle's surroundings, such as e.g. radar, LIDAR, sonar, camera, navigation system e.g. GPS, odometer and/or inertial measurement units, upon which advanced control systems may interpret sensory information to identify appropriate navigation paths, as well as obstacles and/or relevant signage.

Eventually, essentially fully autonomous vehicles capable of sensing their environment and moving safely along e.g. public roads with little or no human input, may see the light of day.

ADAS and/or autonomous driving features as described above are, however, bound to be required to function with a high integrity to provide sufficiently low risk for the vehicle user(s) as well as other traffic participants. Ensuring that the risk is sufficiently low may require intractable amounts of data for statistical proofs, and would - according to an example - take e.g. approximately a hundred vehicles to drive continuously for five centuries, to acquire. There are several approaches to minimize the risk of the ADAS and/or autonomous driving features before they are launched onto public roads. However, on top of this, it is generally believed that the ADAS and/or autonomous driving features should be monitored once in the field, in order to ensure that they adhere to required safety levels. How such field monitoring should be done and further be accomplished with only the production sensor setup - e.g. the sensors of a launched road traffic vehicle - is however unclear. Further, as the complete sensor setups of ADAS and/or autonomous driving features may generate huge amounts of data, it may be challenging - if not impossible - to send all of that data to a cloud for offline processing and analysis.

A paper from the 22nd ITS World Congress, Bordeaux 2015, by Clausen Philipp et al, IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTZ SG1 2AY, UK, vol. 11, no. 3, 1 April 2017, pages 113-125, XP006061375, ISSN: 1751-956X, DOI: 10.1049/IET-ITS.2016.0049, discloses Assessment of positioning accuracy of vehicle trajectories for different road applications.

### SUMMARY OF THE INVENTION

It is therefore an object of embodiments herein to provide an approach for in an improved and/or alternative manner monitor performance an requirement fulfilment of performance requirements of a vehicle ADAS or autonomous driving feature.

The object above may be achieved by the subject-matter disclosed herein. Embodiments are set forth in the appended claims, in the following description and in the drawings.

The disclosed subject-matter relates to a method in accordance with claim 1.

The disclosed subject-matter further relates to a field monitor system in accordance with claim 6.

Furthermore, the disclosed subject-matter relates to a vehicle supporting an ADAS or autonomous driving feature, and comprises a field monitor system as described herein.

Moreover, the disclosed subject-matter relates to a computer program product comprising a computer program containing computer program code means arranged to cause a computer or a processor to execute the steps of a the field monitor system described herein, stored on a computer-readable medium or a carrier wave.

The disclosed subject-matter further relates to a non-volatile computer readable storage medium having stored thereon said computer program product.

Thereby, there is introduced an approach according to which one or more ADAS and/or autonomous driving features may be monitored - e.g. in the field - to evaluate whether they are failing and/or are in risk of failing, and take action when such is the case. That is, since there is stored, during a time period ranging from a first time point to a second time point, a range of perception data on which the ADAS or autonomous driving feature is pertinent derived from a perception system adapted to estimate surroundings of the vehicle, there is saved - e.g. in an optional data buffer - obtained data indicative of vehicle surroundings perceptions, such as e.g. detected objects or objects' states and/or vehicle localization, and/or statistical and physical model predictions of future states, derived continuously and/or intermittently from a first time point to a second time point. Thus, for any time period, perception data such as e.g. sensor readings and run-time estimates are saved to reproduce the majority of the temporal dependencies in the ADAS or autonomous driving feature. Moreover, that is, since there is determined based on post-processing a portion of the range of perception data ranging back from the second time point to an intermediate time point between the first and second time points, ground truth intermediate data at the intermediate time point, which ground truth intermediate data reflects estimates of vehicle surroundings at the intermediate time point conditional on the portion of the range of perception data, data comprised in the portion of the range of perception data is post-processed - e.g. run through a backwards filter - that aligns the e.g. objects' current and predicted future states with what happened in the future - i.e. from the intermediate time point to the second time point - as seen from the intermediate time point. By that, ground truth intermediate data - which may be referred to as production ground truth - of the intermediate time point is achieved. Accordingly, the ground truth intermediate data provides improved estimates of the e.g. states of the objects surrounding the vehicle - or the ADAS or autonomous driving feature - at the intermediate time point, conditional on the data portion. Furthermore, that is, since there is determined based on analysis of the ground truth intermediate data in view of intermediate perception data out of the range of perception data corresponding to the intermediate time point, an accuracy deviation measure indicating deviation between the ground truth intermediate data and the intermediate perception data, there is evaluated a discrepancy between the ground truth intermediate data and the intermediate perception data corresponding to the intermediate time point, such as e.g. discrepancies associated with sensor readings and run-time estimates of e.g. localization and/or objects' states surrounding the vehicle or the ADAS or autonomous driving feature, and/or statistical and physical model predictions of future states. Accordingly, with the increased knowledge of vehicle surroundings as time passes from the intermediate time point to the second time point by analyzing data in reverse temporal direction, it may be evaluated how well the ADAS or autonomous driving feature, the surrounding detecting sensors thereof and/or perception system model predictions of future vehicle surroundings performed at said intermediate time point. Moreover, since there is communicated acknowledgement data when the accuracy deviation measure exceeds a performance threshold, the outcome of the evaluation, i.e. the accuracy deviation measure, is considered in view of at least a first threshold, and should said threshold be violated, then an acknowledgment indicative thereof is transmitted from the field monitor system. Accordingly, the field monitor system brings attention to when intermediate perception data deviates from the ground truth intermediate data to an extent greater than the level(s) defined by the performance threshold. Thus, there may be achieved an evaluation in view of failure-risk, failure and/or failure rate - and/or intervention - of the ADAS or autonomous driving feature, the surrounding detecting sensors thereof and/or perception system model predictions of future vehicle surroundings.

For that reason, an approach is provided for in an improved and/or alternative manner monitor performance and/or requirement fulfilment of performance requirements of a vehicle ADAS or autonomous driving feature.

The technical features and corresponding advantages of the above mentioned method will be discussed in further detail in the following.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates a schematic view of an exemplifying field monitor system of a vehicle according to embodiments of the disclosure;
**Fig. 2** illustrates a schematic view of an exemplifying range of perception data according to embodiments of the disclosure;
**Fig. 3** illustrates a schematic view of exemplifying ground truth data in view of perception data from the range of perception data according to embodiments of the disclosure;
**Fig. 4** illustrates a schematic view of exemplifying ground truth data in view of perception data from the range of perception data according to further embodiments of the disclosure;
**Fig. 5** illustrates a schematic view of further exemplifying ground truth data in view of perception data from the range of perception data according to yet further embodiments of the disclosure;
**Fig. 6** illustrates a schematic view of exemplifying ground truth data in view of perception data from the range of perception data according to still further embodiments of the disclosure;
**Fig. 7** illustrates a schematic view of exemplifying ground truth data in view of perception data from the range of perception data according to even further embodiments of the disclosure;
**Fig. 8** is a schematic block diagram illustrating an exemplifying field monitor system according to embodiments of the disclosure; and
**Fig. 9** is a flowchart depicting an exemplifying method performed by a field monitor system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to performance monitoring and evaluation of an ADAS or autonomous driving feature of a vehicle, there will be disclosed an approach according to which one or more ADAS and/or autonomous driving features may be monitored - e.g. in the field - to evaluate whether they are failing and/or are in risk of failing, and take action when such is the case.

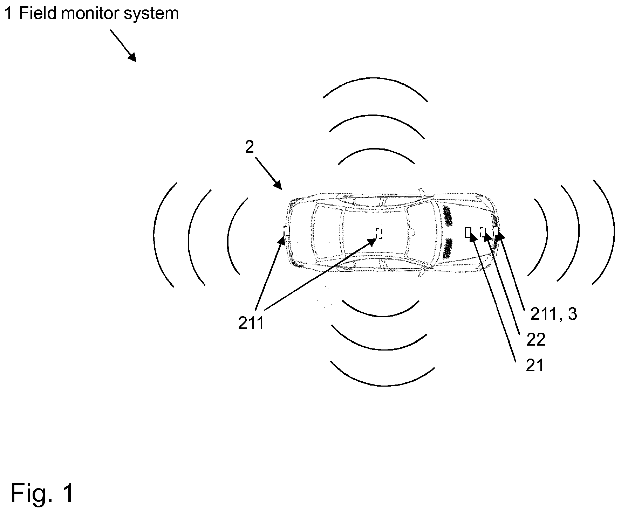

Referring now to the figures and Fig. 1 in particular, there is depicted a schematic view of an exemplifying field monitor system 1 of a vehicle 2 according to embodiments of the disclosure. The field monitor system 1 is adapted for performance monitoring of an ADAS or autonomous driving feature 3 of the vehicle 2. The exemplifying vehicle 2 is adapted to support one or more ADAS or autonomous driving features 3, and here, it comprises the field monitor system 1.

The exemplifying vehicle 2 may refer to any arbitrary manned or unmanned vehicle, for instance an engine-propelled or electrically-powered vehicle such as a car, truck, lorry, van, bus and/or tractor. Moreover, the term "vehicle" may refer to "launched vehicle", "road-traffic vehicle" and/or "production vehicle", and further to "autonomous and/or at least partly autonomous vehicle", "driverless and/or at least partly driverless vehicle", and/or "self-driving and/or at least partly self-driving vehicle". The exemplifying ADAS or autonomous driving feature may refer to any arbitrary ADAS, ADS or autonomous driving feature, e.g. known in the art and/or yet to be developed.

The phrase "field monitor system" may refer to "production vehicle monitor system", "failure monitor system", "performance monitoring system", "performance validation system, "performance evaluation system" and/or "perception assessment system", whereas "of" a vehicle may refer to "comprised in" a vehicle and/or "on-board" a vehicle. "For" performance monitoring, on the other hand, may refer to "adapted for" performance monitoring, whereas the phrase "for performance monitoring and evaluation" of an ADAS or autonomous driving feature may refer to "for failure and/or failure-risk monitoring and evaluation", "for performance assessment", "for performance validation", "for perception evaluation", "for performance evaluation" and/or merely "for performance monitoring" of an ADAS or autonomous driving feature. According to an example, the phrase "for performance monitoring and evaluation" of an ADAS or autonomous driving feature may refer to "for performance monitoring and evaluation, and potential further evaluation and/or intervention," of an ADAS or autonomous driving feature. The phrase "performance monitoring and evaluation of an ADAS or autonomous driving feature of said vehicle" may refer to "performance monitoring and evaluation associated with an ADAS or autonomous driving feature of said vehicle", and/or "performance monitoring and evaluation of perception estimates on which an ADAS or autonomous feature of said vehicle is pertinent". Moreover, "performance monitoring and evaluation of an ADAS or autonomous driving feature" may refer to "performance monitoring and evaluation of an ADAS or autonomous driving feature and/or a subcomponent or constituent thereof". The phrase "an ADAS or autonomous driving feature of said vehicle", on the other hand, may refer to "an ADAS or automated driving system, ADS, of said vehicle", whereas driving "feature" may refer to driving "system" and/or driving "function". "An" ADAS or automated driving feature may further refer to "at least a first" ADAS or automated driving feature.

The vehicle 2 may comprise, be provided with and/or have on-board a **perception system 21** adapted to estimate surroundings of the vehicle 2, and subsequently adapted to make model predictions of future states of the surroundings. The perception system 21 may refer to any commonly known system and/or functionality, e.g. comprised in one or more electronic control modules and/or nodes of the vehicle, adapted and/or configured to interpret sensory information - relevant for driving of the vehicle 2 - to identify e.g. obstacles, vehicle lanes, relevant signage, appropriate navigation paths etc. The exemplifying perception system 21 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional **surrounding detecting sensors 211** comprised in and/or provided on-board the vehicle 2. The surrounding detecting sensors 211 may be represented by any arbitrary sensors adapted to sense and/or perceive the vehicle's 2 surroundings and/or whereabouts, and may e.g. refer to one or a combination of one or more of radar, LIDAR, sonar, camera, navigation system e.g. GPS, odometer and/or inertial measurement units.

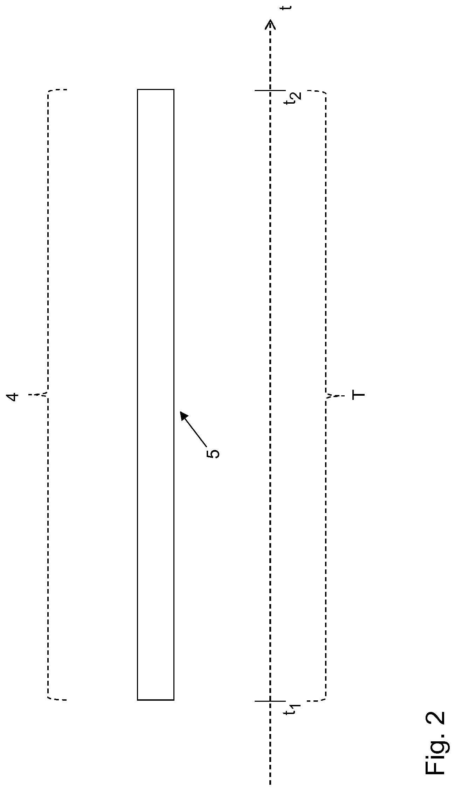

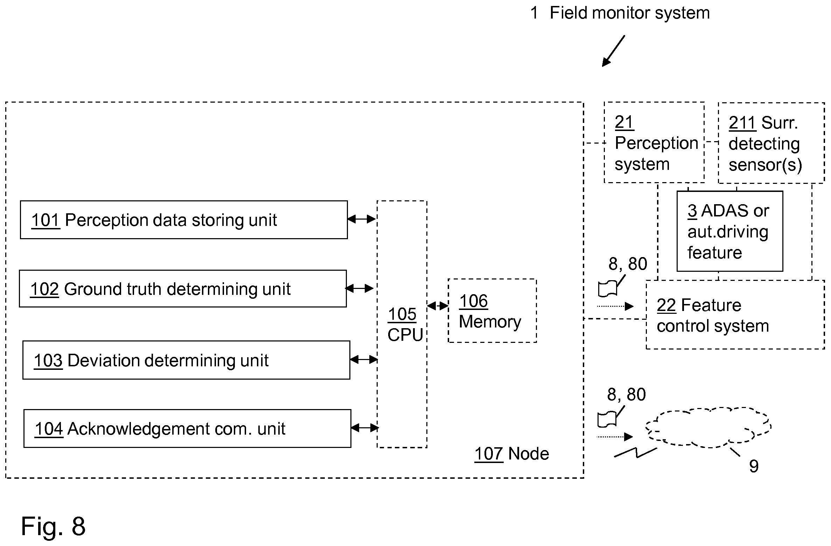

As further depicted in **Fig. 2****,** the field monitor system 1 is - by means of a **perception data storing unit 101** (shown in Fig. 8) - adapted and/or configured for storing, during a **time period T** ranging from a **first time point t₁** to a **second time point t₂,** a **range of perception data 4** on which the ADAS or autonomous driving feature 3 is pertinent, derived from a perception system 21 adapted to estimate surroundings of the vehicle 2. Thereby, there is saved - e.g. in an exemplifying optional data **buffer 5** - obtained data indicative of vehicle surroundings perceptions, such as e.g. detected objects or objects' states and/or vehicle localization, and/or statistical and physical model predictions of future states, derived continuously and/or intermittently from a first time point t₁ to a second time point t₂. Thus, for any time period T, perception data such as e.g. sensor readings and run-time estimates are saved to reproduce the majority of the temporal dependencies in the ADAS or autonomous driving feature 3.

The range of perception data 4 may be derived from the perception system 21 in any arbitrary manner - e.g. known - such as digitally, electronically, wirelessly and/or by wire. Moreover, the range of perception data 4 may refer to any range of data of relevance for the ADAS or autonomous driving feature 3, which data further may be indicative of perceptions of surroundings of the vehicle 2, e.g. comprising - and/or being derived from - sensory data from the one or more surroundings detecting sensors 211. Perception data at the first time point t₁ may - or may not - differ from perception data at the second time point t₂. Storing of the range of perception data 4 may be a continuous ongoing process, and further, perception data of said range 4 may be stored continuously and/or intermittently. The time period T - and correspondingly the length of the optional buffer 5 - may be of any arbitrary size deemed feasible, e.g. in consideration of data capacity restraints and/or characteristics of the ADAS or autonomous feature 3, and may for instance range from under a second up to several minutes, or more preferred, from a few seconds up to less than a minute.

The term "storing" a range of perception data may refer to "storing in one or more memories", "storing on-board said vehicle", "storing in one or more memories on-board said vehicle", and/or "storing digitally and/or electronically" a range of perception data, and further to "collecting" and/or "obtaining" a range of perception data. The term "range" of perception data, on the other hand, may refer to "amount", "series", "continuous and/or intermittent flow" and/or "collection" of perception data, whereas "perception data" may refer to "continuously and/or intermittently collected perception data". Furthermore, the term "perception" data may refer to "surroundings assessment" data, "sensory" data and/or "temporal dependencies" data, whereas perception "data" may refer to perception "information" and/or "estimates". The phrase "perception data on which said ADAS or autonomous driving feature is pertinent" may refer to "perception data relevant for said ADAS or autonomous driving feature" and/or "perception data by which said ADAS or autonomous driving feature is affected". The term "derived" from a perception system, on the other hand, may refer to "obtained" from a perception system and/or "based on output data" from a perception system, whereas perception system adapted to "estimate surroundings of said vehicle" may refer to perception system adapted and/or configured to "estimate the surroundings of said vehicle", "estimate at least a portion of surroundings of said vehicle", "determine surroundings of said vehicle", "interpret sensory information relevant for driving of said vehicle", and/or "estimate surroundings of said vehicle and make model predictions of future states of the surroundings of said vehicle". "Perception" system may refer to "vehicle surroundings assessment and/or evaluation" system, whereas perception "system" may refer to perception "function and/or functionality". The phrase storing "during" a time period may refer to storing "for" a time period, whereas time period "ranging" from a first time point to a second time point may refer to time period "extending" and/or "taking place" from a first time point to a second time point. "Time period" may refer to "predeterminable time period" and/or "predetermined time period". "Time point", on the other hand, may refer to "point in time", whereas "from a first time point to a second time point" may refer to "from a first time point to a subsequent second time point".

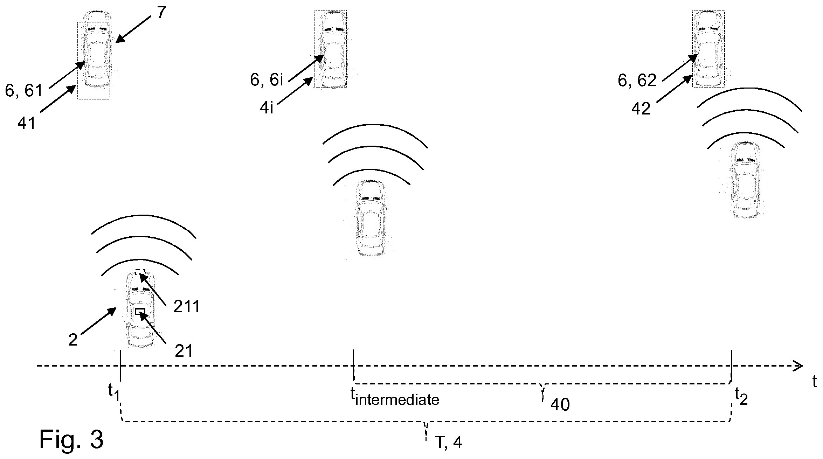

As exemplified in **Figs. 3-6****,** the field monitor system 1 is - by means of a **ground truth determining unit 102** (shown in Fig. 8) - adapted and/or configured for determining based on post-processing a **portion 40** of the range of perception data 4 ranging back from the second time point t₂ to an **intermediate time point t_{intermediate}** between the first and second time points t₁, t₂, **ground truth intermediate data 6i, 6i', 6i", 6i"', 6iʺʺ** at the intermediate time point t_{intermediate}, which ground truth intermediate data 6i, 6i', 6i", 6i"', 6iʺʺ reflects estimates of vehicle surroundings at the intermediate time point t_{intermediate} conditional on the portion 40 of the range of perception data 4. Thereby, data comprised in the portion 40 of the range of perception data 4 is post-processed - e.g. run through a backwards filter - that aligns the e.g. objects current and predicted future states with what happened in the future - i.e. from the intermediate time point t_{intermediate} to the second time point t₂ - as seen from the intermediate time point t_{intermediate}. By that, ground truth intermediate data 6i, 6i', 6i", 6i"', 6i"" - which may be referred to as **production ground truth 6, 6', 6", 6‴, 6ʺʺ** - of the intermediate time point t_{intermediate} is achieved. Accordingly, the ground truth intermediate data 6i, 6i', 6i", 6i"', 6iʺʺ provides improved estimates of the e.g. states of the objects surrounding the vehicle - or the ADAS or autonomous driving feature - at the intermediate time point t_{intermediate}, conditional on the data portion 40.

"Determining" ground truth intermediate data may refer to "calculating" and/or "deriving" ground truth intermediate data, and according to an example further to "determining with support from one or more algorithms" ground truth intermediate data. Determining "based on" post-processing, on the other hand, may refer to determining "by" post-processing, whereas based on "post-processing" may refer to based on "backward-processing" and/or based on "running through one or more backwards filters". The phrase "a portion of said range" of perception data may refer to "at least a portion of said range" of perception data and/or "a selection of said range" of perception data, whereas perception data "ranging back from" may refer to perception data "ranging from". "Ground truth intermediate" data may refer to "processed and/or post-processed intermediate" data, whereas ground truth intermediate "data" may refer to ground truth intermediate "information", "perceptions" and/or "estimates". Ground truth intermediate data "at" the intermediate time point, on the other hand, may refer to ground truth intermediate data "corresponding to" and/or "reflected at" the intermediate time point, whereas ground truth intermediate data "reflecting" estimates may refer to ground truth intermediate data "indicative of" estimates. The intermediate time point t_{intermediate} may - or may not - be equal to or essentially equal to the first time point t₁. "Estimates" of vehicle surroundings may refer to "calculations" of vehicle surroundings, whereas estimates of "vehicle surrounding" may refer to estimates of "sensory data". The phrase estimates of vehicle surroundings "at" the intermediate time point, on the other hand, may refer to estimates of vehicle surroundings "corresponding to" and/or "reflected at" the intermediate time point, whereas "conditional on" the selection of the range of perception data may refer to "based on data comprised in" the portion of the range of perception data and/or "based on post-processing of data comprised in" the portion of the range of perception data.

The field monitor system 1 is - by means of a **deviation determining unit 103** (shown in Fig. 8) - adapted and/or configured for determining based on analysis of the ground truth intermediate data 6i, i, 6i", 6i"', 6iʺʺ in view of **intermediate perception data 4i, 4i', 4i", 4i"', 4iʺʺ** out of the range of perception data 4 corresponding to the intermediate time point t_{intermediate}, an accuracy deviation measure indicating deviation between the ground truth intermediate data 6i, 6i', 6i", 6i"', 6iʺʺ and the intermediate perception data 4i, 4i', 4i", 4i"', 4iʺʺ. Thereby, there is evaluated a discrepancy between the ground truth intermediate data 6i, 6i', 6i", 6i"', 6iʺʺand the intermediate perception data 4i, 4i', 4i", 4i"', 4iʺʺ corresponding to the intermediate time point t_{intermediate}, such as e.g. discrepancies associated with sensor readings and run-time estimates of e.g. localization and/or objects' states surrounding the vehicle 2 or the ADAS or autonomous driving feature 3, and/or statistical and physical model predictions of future states. Accordingly, with the increased knowledge of vehicle surroundings 6i, 6i', 6i", 6i"', 6iʺʺ as time passes from the intermediate time point t_{intermediate} to the second time point t₂ by analyzing data in reverse temporal direction, it may be evaluated how well the ADAS or autonomous driving feature 3, the surrounding detecting sensors 211 thereof and/or perception system 21 model predictions of future vehicle surroundings performed at said intermediate time point t_{intermediate}.

The accuracy deviation may for instance indicate a failure and/or a risk of failure, and may be monitored e.g. in view of quality aspects and/or safety critical aspects. According to an example, in view of safety and/or a safety requirement e.g. on perception performance, the focus may for instance be on near-misses and/or failures to adhere to e.g. a required safety level, whereas in in view of quality, the focus may be for instance on actual failures. It may hence be noted that failures may relate not only to e.g. hardware failures, but additionally or alternatively to failures to meet e.g. a requirement on performance or performance requirement related to safety.

"Determining" an accuracy deviation measure may refer to "calculating" an accuracy deviation measure, whereas determining "based on analysis of said ground truth intermediate data in view of" intermediate data may refer to determining "based on a difference of said ground truth intermediate data as compared to" intermediate data. "Accuracy deviation measure", on the other hand, may refer to merely "accuracy deviation", and further to "ground truth deviation measure", whereas "indicating deviation" may refer to "indicative of deviation" and/or "reflecting deviation". The term "deviation" may refer to "discrepancy". The phrase "intermediate perception data out of said range of perception data corresponding to said intermediate time point", on the other hand, may refer to "intermediate perception data of said intermediate time point".

The increased knowledge of vehicle surroundings as time passes is exemplified in **Figs. 3-7****.** In **Fig. 3****,** which illustrates a schematic view of exemplifying ground truth data 6 in view of perception data from the range of perception data 4 according to embodiments of the disclosure, there is illustrated **first time point perception data 41** of the first time point t₁, intermediate perception data 4i of the intermediate time point t_{intermediate}, and **second time point perception data 42** of the second time point t₂, of an **object 7** - here another vehicle - which is derived from the perception system 21, here with support from the optional surrounding detecting sensors 211. In the illustrated example, the estimate 4i of the surrounding object 7 at the intermediate time point t_{intermediate}, i.e. the intermediate perception data 4i, deviates from the determined ground truth intermediate data 6i, in that the object 7 according to the intermediate perception data 4i is placed further to the left than according to the ground truth intermediate data 6i.

It is to be understood that there may exist additional perception data and/or ground truth data corresponding to other time points. Further exemplified is for instance how the estimate 41 of the surrounding object 7 at the first time point t₁ - here to greater extent - may deviate from **ground truth data 61** pertinent the first time point t₁, and similarly, how the estimate 42 of the surrounding object 7 at the second time point t₂ - here to lesser extent - may deviate from **ground truth data 62** pertinent the second time point t₂.

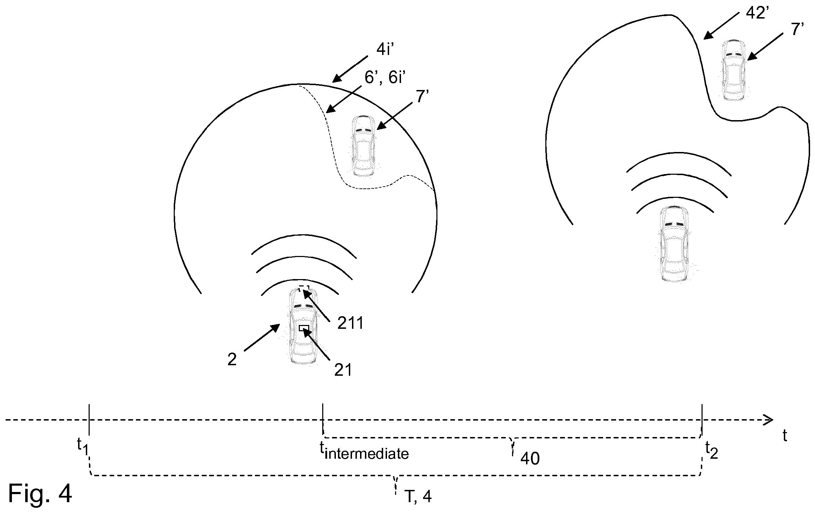

In **Fig. 4****,** which illustrates a schematic view of exemplifying ground truth data 6' in view of perception data from the range of perception data 4 according to further embodiments of the disclosure, there is depicted intermediate perception data 4i' of the intermediate time point t_{intermediate} and second time point perception data 42' of the second time point t₂ - here represented by free space estimations - which is derived from the perception system 21, here with support from the optional surrounding detecting sensors 211. In the illustrated example, the estimate 4i' of free space at the intermediate time point t_{intermediate}, i.e. the intermediate perception data 4i', deviates from the determined ground truth intermediate data 6i', in that by the second time point t₂, an object 7' - here vehicle - was detected, which was falsely not detected at the intermediate time point t_{intermediate}. This phenomenon may be referred to as a false negative.

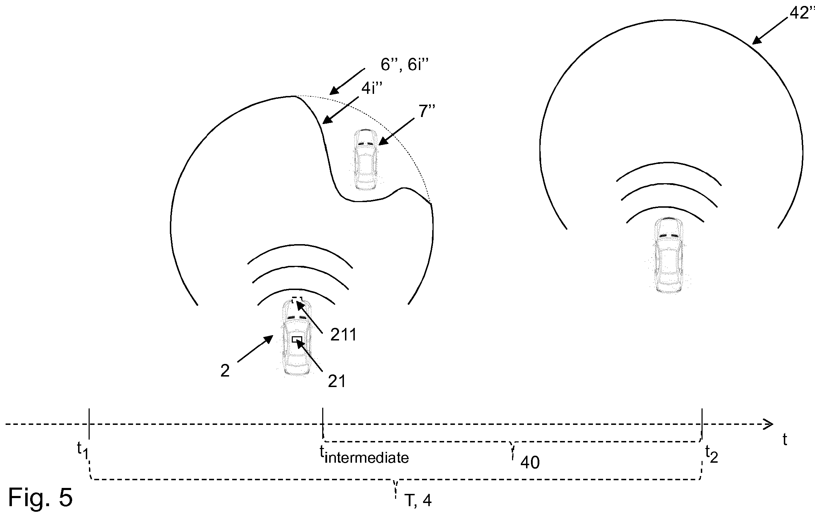

In **Fig. 5****,** which illustrates a schematic view of exemplifying ground truth data 6" in view of perception data from the range of perception data 4 according to yet further embodiments of the disclosure, there is illustrated intermediate perception data 4i" of the intermediate time point t_{intermediate} and second time point perception data 42" of the second time point t₂ - here represented by free space estimations - which is derived from the perception system 21, here with support from the optional surrounding detecting sensors 211. In the illustrated example, the estimate 4i" of free space at the intermediate time point t_{intermediate}, i.e. the intermediate perception data 4i", deviates from the determined ground truth intermediate data 6i", in that by the second time point t₂, it could be concluded that there was no presence of an object 7" - here vehicle - which was falsely detected at the intermediate time t_{intermediate}. This phenomenon may be referred to as a false positive.

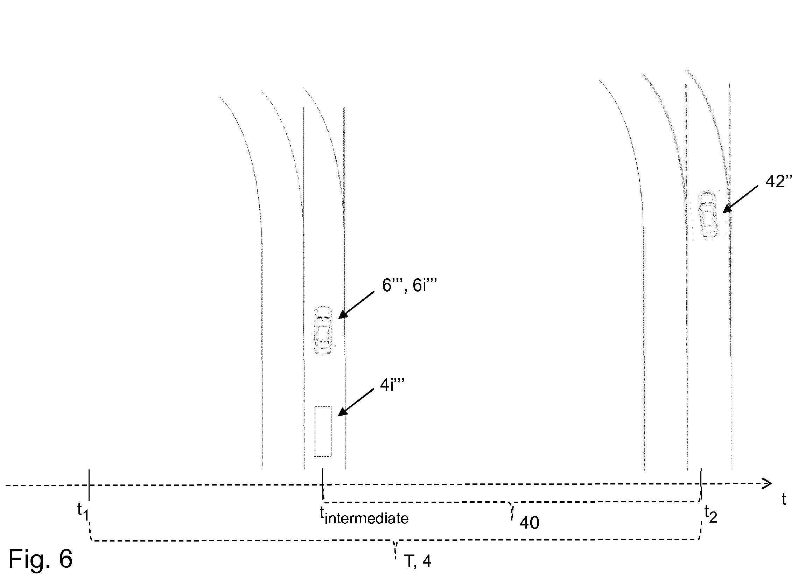

In **Fig. 6****,** which illustrates a schematic view of exemplifying ground truth data 6‴ in view of perception data from the range of perception data 4 according to still further embodiments of the disclosure, there is illustrated intermediate perception data 4i‴ of the intermediate time point t_{intermediate} and second time point perception data 42‴ of the second time point t₂ - here represented by localization estimations and/or lane curve estimations - which is derived from the perception system 21, optionally with support from the surrounding detecting sensors 211. In the illustrated example, the estimate 4i‴ of the localization of the vehicle 2 and/or a lane curve at the intermediate time point t_{intermediate}, i.e. the intermediate perception data 4i"', deviates from the determined ground truth intermediate data 6i"', in that the vehicle 2 according to the intermediate perception data 4i‴ is positioned further away from the lane curve than according to the ground truth intermediate data 6i‴. This phenomenon may be referred to as a faulty localization.

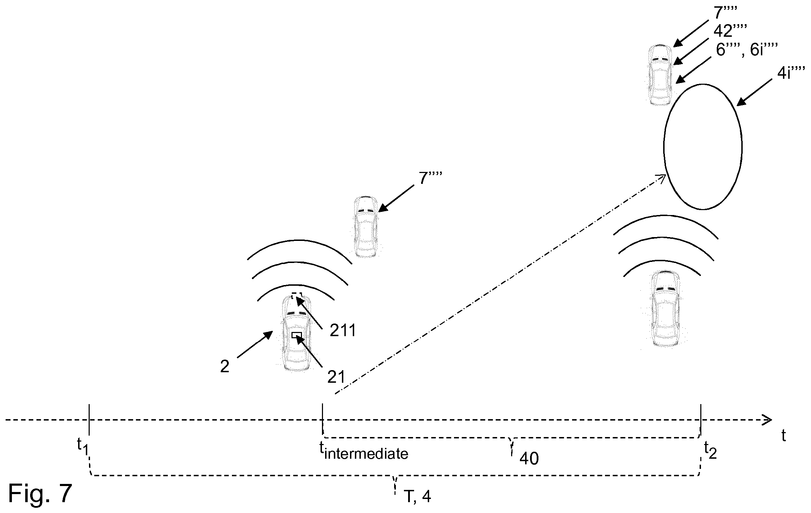

According to an example, the perception data may potentially be related to and/or be represented by model predictions of future surroundings that the perception system 21 does based on its current understanding of the surroundings. Thus, in **Fig. 7****,** which illustrates a schematic view of exemplifying ground truth data 6ʺʺ in view of perception data from the range of perception data 4 according to even further embodiments of the disclosure, there is illustrated intermediate perception data 4iʺʺ of the intermediate time point t_{intermediate} and second time point perception data 42ʺʺ of the second time point t₂, derived from the perception system 21, optionally with support from the surrounding detecting sensors 211. Here, the intermediate perception data 4iʺʺ is represented by at least a first prediction model predicting an area 4iʺʺ where an object 7ʺʺ based on its type and current velocity captured at the intermediate time point t_{intermediate}, is predicted to reside at the second time point t₂, whereas the second time point perception data 42ʺʺ is represented by at least a second prediction model - potentially differing from the at least first model - comprising said object 7ʺʺ captured at the second time point t₂. In the illustrated example, the prediction model estimate 4iʺʺ at the intermediate time point t_{intermediate} of the area where the object 7ʺʺ is predicted to reside at the second time point t₂, i.e. the intermediate perception data 4i"", deviates from the determined ground truth intermediate data 6iʺʺ, in that the object 7ʺʺ according to the ground truth intermediate data 6iʺʺ not is within the area 4i"". Here, it may be concluded that there is a discrepancy in some of the measurements and/or predictions models, and hence reason to suspect that the at least first prediction model at least to some extent may have been incorrect.

The field monitor system 1 is - by means of an **acknowledgement communicating unit 104** (shown in Fig. 8) - adapted and/or configured for communicating **acknowledgement data 8** when the accuracy deviation measure exceeds a performance threshold. Thereby, the outcome of the evaluation, i.e. the accuracy deviation measure, is considered in view of at least a first threshold, and should said threshold be violated, then an acknowledgment 8 indicative thereof is transmitted from the field monitor system 1. Accordingly, the field monitor system 1 brings attention to when intermediate perception data 4i, 4i', 4i", 4i"', 4iʺʺ deviates from the ground truth intermediate data 6i, 6i', 6i", 6i"', 6iʺʺ to an extent greater than the level(s) defined by the performance threshold. Thus, there may be achieved an evaluation in view of failure-risk, failure and/or failure rate - and/or intervention - of the ADAS or autonomous driving feature 3, the surrounding detecting sensors 211 thereof and/or perception system 21 model predictions of future vehicle surroundings.

The performance threshold may be set to any arbitrary limit and/or deviation maximum deemed relevant, e.g. in view of characteristics of - and/or requirements related to - the ADAS or autonomous driving feature 3, the surrounding detecting sensors 211 thereof and/or perception system 21 model predictions of future vehicle surroundings. The performance threshold may further be variable.

"Communicating" acknowledgement data may refer to "communicating wirelessly and/or by wire" acknowledgement data and/or "communicating in due time and/or when deemed feasible and/or safe" acknowledgement data, whereas "acknowledgement data" may refer to "one or more acknowledgement signals" and/or "an acknowledgement message", and further to "acknowledgement data indicative of, reflecting and/or comprising at least said accuracy deviation measure". The phrase "when said accuracy deviation measure exceeds", on the other hand, may refer to "should said accuracy deviation measure exceed" and/or "if said accuracy deviation measure exceed", whereas "performance" threshold may refer to "adherence" threshold. Moreover, "performance threshold" may refer to "predeterminable and/or predetermined performance threshold", and further to "first performance threshold".

The field monitor system 1 may - by means of the acknowledgement communicating unit 104 (shown in Fig. 8) - optionally be adapted and/or configured for transmitting the acknowledgement data 8 wirelessly to a remote **entity 9,** which acknowledgement data 8 comprises the range of perception data 4. Thereby, data related to the intermediate perception data 4i, 4i', 4i", 4i"', 4iʺʺ and/or events at the intermediate time point t₁ may be transmitted to the entity 9 for offline processing and/or analysis. The timing of transmittal may be arbitrarily selected as deemed feasible, such as e.g. promptly or at a point in time deemed suitable. The latter case may e.g. refer to awaiting a high bandwidth connection to the remote entity 9, such as e.g. a Wifi connection.

The entity 9 may refer to any off-board data storage entity - e.g. known - adapted for and/or configured for off-board and/or offline processing and/or analysis, such as e.g. a cloud and/or automotive cloud, cloud network adapted for cloud-based storage, back-end system, and/or one or more servers. "Remote" entity may refer to "off-board" entity and/or "offline" entity, whereas "comprising said range of perception data" may refer to "comprising essentially said range of perception data".

Additionally or alternatively, optionally, the field monitor system 1 may - by means of the acknowledgement communicating unit 104 (shown in Fig. 8) - be adapted and/or configured for transmitting the acknowledgement data 8 to an on-board **feature control system 22** adapted to control the ADAS or autonomous driving feature 3, which acknowledgement data 8 comprises an indication to disable the ADAS or autonomous driving feature 3. Thereby, the ADAS or autonomous driving feature 3 - and/or one or more surrounding detecting sensors 211 associated therewith - or the functionality thereof, may be revoked to, at least temporarily, inhibit further activation(s).

The feature control system 22 may refer to any commonly known system and/or functionality, e.g. comprised in one or more electronic control modules and/or nodes of the vehicle, adapted and/or configured to at least in part control the the ADAS or autonomous driving feature 3. "Feature control system" may refer to "feature disablement system" and/or "ADAS or ADS control system", whereas feature control system adapted to "control" may refer to feature control system adapted to "at least partly control". "Comprising an indication" to disable, on the other hand, may refer to "prompting" to disable and/or "comprising instructions prompting" to disable, whereas "indication to disable" may refer to "indication to in due time disable" and/or "indication to disable when deemed feasible and/or safe". Moreover, "disable" the ADAS or autonomous driving feature may refer to "inhibit" and/or "restrict functionality of" the ADAS or autonomous driving feature.

The field monitor system 1 may - by means of the acknowledgement communicating unit 104 (shown in Fig. 8) - optionally be adapted and/or configured for communicating, when the accuracy deviation measure exceeds a further performance threshold, **further acknowledgement data 80,** which performance threshold deviates from the further performance threshold. Thereby, different acknowledgment data 8, 80 may be communicated depending on which threshold is violated. Accordingly, exceeding the performance threshold - upon which the acknowledgement data 8 is communicated - may initiate a first action, whereas exceeding the further performance threshold - upon which the further acknowledgement data 80 is communicated - may initiate a differing second action. That is, here, the outcome of the evaluation - i.e. the accuracy deviation measure - is considered in view of an additional second threshold, and should said second threshold be violated, then a further acknowledgment indicative thereof is transmitted from the field monitor system. Accordingly, the field monitor system may additionally bring attention to when intermediate perception data 4i, 4i', 4i", 4i"', 4iʺʺ deviates from the ground truth intermediate data 6i, 6i', 6i", 6i"', 6iʺʺ to an extent greater than the level(s) defined by the further performance threshold. Thus, there may be achieved a further evaluation in view of failure-risk, failure and/or failure rate - and/or intervention - of the ADAS or autonomous driving feature 3, the surrounding detecting sensors 211 thereof and/or perception system 21 model predictions of future vehicle surroundings.

The further performance threshold may be set to any arbitrary limit and/or deviation maximum deemed relevant, e.g. in view of characteristics of - and/or requirements related to - the ADAS or autonomous driving feature 3, the surrounding detecting sensors 211 thereof and/or perception system 21 model predictions of future vehicle surroundings. Moreover, the further performance threshold may be variable.

"Communicating" further acknowledgement data may refer to "communicating wirelessly and/or by wire" further acknowledgement data and/or "communicating in due time and/or when deemed feasible and/or safe" further acknowledgement data, whereas "further acknowledgement data" may refer to "one or more further acknowledgement signals" and/or "a further acknowledgement message". Moreover, "further acknowledgement data" may refer to "further acknowledgement data indicative of, reflecting and/or comprising at least said accuracy deviation measure". The phrase "when said accuracy deviation measure exceeds a further performance threshold", on the other hand, may refer to "should said accuracy deviation measure exceed a further performance threshold" and/or "if said accuracy deviation measure exceed", whereas "further performance" threshold may refer to "further adherence" threshold. Moreover, "further performance threshold" may refer to "predeterminable and/or predetermined further performance threshold", and further to "second performance threshold".

The field monitor system 1 may - by means of the acknowledgement communicating unit 104 (shown in Fig. 8) - optionally be adapted and/or configured for transmitting the further acknowledgement data 80 wirelessly to the remote entity 9, which further acknowledgement data 80 comprises the range of perception data 4. Thereby, data related to the intermediate perception data 4i, 4i', 4i", 4i"', 4iʺʺ and/or events at the intermediate time point t₁ may be transmitted to the entity 9 for offline processing and/or analysis, when the further performance threshold is violated. The timing of transmittal may be arbitrarily selected as deemed feasible, such as e.g. promptly or at a point in time deemed suitable. The latter case may e.g. refer to awaiting a high bandwidth connection to the remote entity 9, such as e.g. a Wifi connection.

Alternatively, optionally, the field monitor system 1 may - by means of the acknowledgement communicating unit 104 - optionally be adapted and/or configured for transmitting the further acknowledgement data 80 to the feature control system 22, which further acknowledgement data 80 comprises an indication to disable the ADAS or autonomous driving feature 3. Thereby, the ADAS or autonomous driving feature 3 - and/or one or more surrounding detecting sensors 211 associated therewith - may be revoked to, at least temporarily, inhibit further activation(s), when the further performance threshold is violated.

Further, as illustrated in Figs. 3-5, the range of perception data 4 comprises perception data of a surrounding object 7, 7', 7", wherein the accuracy deviation measure reflects a measure in view of the object 7, 7', 7". Thereby, production ground truth 6, 6', 6" may be utilized for performance and/or failure-risk or failure assessment of one or more of the one or more surrounding detecting sensors 211 associated with the ADAS or autonomous driving feature 3, used to detect said object 7, 7', 7". That is, if for instance the vehicle 2 is approaching an object 7, 7', 7", the sensor estimates may be limited due to the range of the sensors 211. As the vehicle comes nearer the object 7, 7', 7", however, the sensors 211 may operate in more favorable ranges and give a higher confidence in the output. The production ground truth 6, 6', 6"may accordingly be used to assess the accuracy of early outputs 4i, 4i', 4i" of the sensors 211 when the object 7, 7', 7" may have been at a further distance from the vehicle 2. In a similar manner, should the object 7, 7', 7" for a period of time remain at an essentially constant distance, the increased number of measurements may, when post-processed, increase the confidence in the output 6, 6', 6".

The sensor assessment described above may for instance be done on classification of the object 7, 7', 7". Additionally or alternatively, sensor assessment may be done on state estimating such as e.g. velocity and/or position, and/or object attributes such as e.g. size and/or colour. The sensor assessment may then yield a result, such as an accuracy deviation measure, indicating whether the sensor(s) 221 performs as promised or not. In the latter case, which may reflect a situation where the difference is relatively small but the performance threshold nonetheless is violated, the acknowledgement data 8 comprising the range of perception data 4 may for instance be transmitted to the remote entity 9 for offline processing and/or analysis. Additionally, should also the optional further threshold be violated, which may reflect a situation where the difference is relatively large e.g. indicating malfunctioning sensor(s) 211, the further acknowledgement data 80 - comprising an indication to disable the ADAS or autonomous driving feature, or one or more of the sensor(s) 211 associated therewith - may for instance be transmitted to the on-board feature control system 22.

According to an example, the phrase "said accuracy deviation measure reflecting a measure in view of said object" may refer to "said accuracy deviation measure reflecting a measure in view of said object, whereby performance and/or failure or failure-risk of at least one of said one or more surrounding detecting sensors is evaluated".

Moreover, optionally, the accuracy deviation measure may reflect a measure in view of estimated safety assessment on which the ADAS or autonomous driving feature 3 is pertinent. That is, there is a number of different safety or threat measures that may be used as a proxy to assess safety on an ADAS or autonomous driving feature 3. One example of such a safety or threat measure is the Break Threat Number, BTN, defined as the required braking to avoid collision divided by the available braking capacity. A BTN equal to one means collision, and the closer to zero, the further from a critical situation the ADAS or autonomous driving feature 3. Additional measures may be time to collision, being measured as the current states of the ADAS or autonomous driving feature 3, and a target vehicle, and assuming constant velocities of the two. It is known to use extreme value theory to extrapolate data from a field test to validate the potential crash rate. If such a method is used pre-deployment of an ADAS or autonomous driving feature 3, the introduced field monitor system 1 may assess whether this holds true also when the ADAS or autonomous driving feature 3 is on public roads and/or in customer hands.

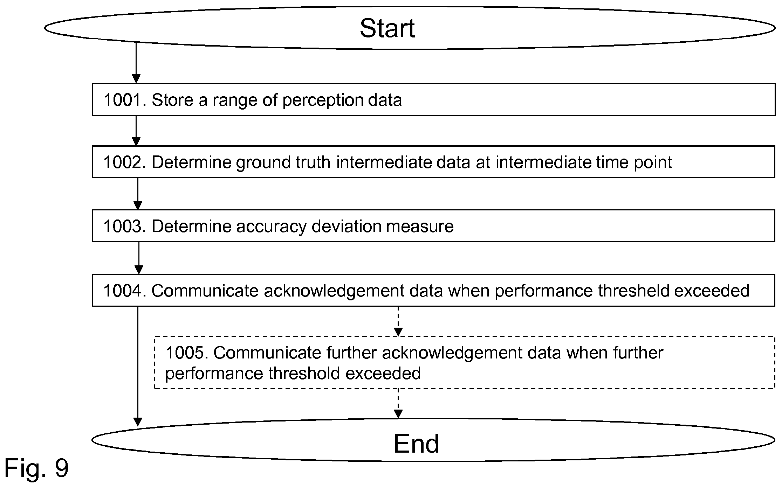

As further shown in **Fig. 8****,** which is a schematic block diagram illustrating an exemplifying field monitor system 1 according to embodiments of the disclosure, the field monitor system 1 comprises a perception data storing unit 101, a ground truth determining unit 102, a deviation determining unit 103 and an acknowledgement communicating unit 104, all of which already have been described in greater detail above. Furthermore, the embodiments herein for performance monitoring and evaluation of an ADAS or autonomous driving feature 3 of the vehicle 2, may be implemented through one or more processors, such as a **processor 105,** here denoted CPU, together with computer program code for performing the functions and actions of the embodiments herein. Said program code may also be provided as a computer program product, for instance in the form of a data carrier carrying computer program code for performing the embodiments herein when being loaded into the field monitor system 1. One such carrier may be in the form of a CD ROM disc and/or a hard drive, it is however feasible with other data carriers. The computer program code may furthermore be provided as pure program code on a server and downloaded to the field monitor system 1. The field monitor system 1 may further comprise a **memory 106** comprising one or more memory units. The memory 106 may be arranged to be used to store e.g. information, and further to store data, configurations, scheduling, and applications, to perform the methods herein when being executed in the field monitor system 1. For instance, the computer program code may be implemented in the firmware, stored in FLASH memory 106, of an embedded processor 105, and/or downloaded wirelessly e.g. from an off-board server. Furthermore, the perception data storing unit 101, the ground truth determining unit 102, the deviation determining unit 103, the acknowledgement communicating unit 104, the optional processor 105 and/or the optional memory 106, may at least partly be comprised in one or more **nodes 107** e.g. ECUs of the vehicle 2. Those skilled in the art will also appreciate that said units 101, 102, 103, 104 described above may refer to a combination of analog and digital circuits, and/or one or more processors configured with software and/or firmware, e.g. stored in a memory such as the memory 106, that when executed by the one or more processors such as the processor 105 perform as described herein, such as in conjunction with Fig. 9. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

Further shown in Fig. 8 is the ADAS or autonomous driving feature 3, the perception system 21, the optional one or more surrounding detecting sensors 211, the optional feature control system 22, the acknowledgement data 8, the optional further acknowledgement data 80, and the optional remote entity 9, all of which have been discussed in greater detail above.

**Fig. 9** is a flowchart depicting an exemplifying method performed by a field monitor system 1 according to embodiments of the disclosure. Said method is for performance monitoring and evaluation of an ADAS or autonomous driving feature 3 of a vehicle 2. The exemplifying method, which may be continuously repeated, comprises one or more of the following actions discussed with support from Figs. 1-7. Moreover, the actions may be taken in any suitable order and/or one or more actions may be performed simultaneously and/or in alternate order where applicable. For instance, Action 1004 and optional Action 1005 may be performed in alternate order and/or simultaneously.

### Action 1001

In Action 1001, the field monitor system 1 stores during a time period T ranging from a first time point t₁ to a second time point t₂ - e.g. with support from the perception data storing unit 101 - a range of perception data 4 on which the ADAS or autonomous driving feature 3 is pertinent, derived from a perception system 21 adapted to estimate surroundings of the vehicle 2.

The range of perception data 4 comprises perception data of a surrounding object 7, 7', 7", wherein the accuracy deviation measure reflects a measure in view of the object 7, 7', 7". Further optionally, the accuracy deviation measure may reflect a measure in view of estimated safety assessment on which the ADAS or autonomous driving feature 3 is pertinent.

### Action 1002

In Action 1002, the field monitor system 1 determines - e.g. with support from the ground truth determining unit 102 - based on post-processing a portion 40 of the range of perception data 4 ranging back from the second time point t₂ to an intermediate time point t_{intermediate} between the first and second time points t₁, t₂, ground truth intermediate data 6i, 6i', 6i", 6i"', 6iʺʺ at the intermediate time point t_{intermediate}, which ground truth intermediate data 6i, 6i', 6i", 6i"', 6iʺʺ reflects estimates of vehicle surroundings at the intermediate time point t_{intermediate} conditional on the portion 40 of the range of perception data 4.

### Action 1003

In Action 1003, the field monitor system 1 determines - e.g. with support from the deviation determining unit 103 - based on analysis of the ground truth intermediate data 6i, 6i', 6i", 6i"', 6iʺʺ in view of intermediate perception data 4i, 4i', 4i", 4i"', 4iʺʺ out of the range of perception data 4 corresponding to the intermediate time point t_{intermediate}, an accuracy deviation measure indicating deviation between the ground truth intermediate data 6i, 6i', 6i", 6i"', 6iʺʺ and the intermediate perception data 4i, 4i', 4i", 4i"', 4i"".

### Action 1004

In Action 1004, the field monitor system 1 communicates - e.g. with support from the acknowledgement communicating unit 104 - acknowledgement data 8 when the accuracy deviation measure exceeds a performance threshold.

Optionally, Action 1004 of communicating acknowledgement data 8 may comprise transmitting the acknowledgement data 8 wirelessly to a remote entity 9, which acknowledgement data 8 comprises the range of perception data 4.

Additionally or alternatively, optionally, Action 1004 of communicating acknowledgement data 8 may comprise transmitting the acknowledgement data 8 to an on-board feature control system 22 adapted to control the ADAS or autonomous driving feature 3, which acknowledgement data 8 comprises an indication to disable the ADAS or autonomous driving feature 3.

### Action 1005

In optional Action 1005, the field monitor system 1 may, when the accuracy deviation measure exceeds a further performance threshold, communicate - e.g. with support from the acknowledgement communicating unit 104 - further acknowledgement data 80, wherein the performance threshold deviates from the further performance threshold.

Optionally, Action 1005 of communicating further acknowledgement data 80 may comprise transmitting the further acknowledgement data 80 wirelessly to the remote entity 9, which further acknowledgement data comprises the range of perception data 4.

Additionally or alternatively, Action 1005 of communicating further acknowledgement data 80 may comprise transmitting the further acknowledgement data 80 to the feature control system 22, which further acknowledgement data 80 comprises an indication to disable the ADAS or autonomous driving feature 3.

It should be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a field monitor system (1) of a vehicle (2) for performance monitoring and evaluation of an advanced driver-assistance system, ADAS, or autonomous driving feature (3) of said vehicle (2), said method comprising:
***storing*** (1001), during a time period (T) ranging from a first time point (t₁) to a second time point (t₂), a range of perception data (4) on which said ADAS or autonomous driving feature (3) is pertinent derived from a perception system (21) adapted to estimate surroundings of said vehicle (2);
***determining*** (1002) based on post-processing comprising backward-processing a portion (40) of said range of perception data (4) ranging back from said second time point (t₂) to an intermediate time point (t_{intermediate}) between said first and second time points (t₁, t₂), ground truth intermediate data (6i, 6i', 6i", 6i"', 6iʺʺ) at said intermediate time point (t_{intermediate}), said ground truth intermediate data (6i, 6i', 6i", 6i"', 6i"") reflecting estimates of vehicle surroundings at said intermediate time point (t_{intermediate}) conditional on i.e. based on post-processing of data comprised in said portion (40) of the range of perception data (4);
***determining*** (1003) based on analysis of said ground truth intermediate data (6i, 6i', 6i", 6i"', 6iʺʺ) in view of intermediate perception data (4i, 4i', 4i", 4i"', 4i"") out of said range of perception data (4) corresponding to said intermediate time point (t_{intermediate}), an accuracy deviation measure indicating deviation between said ground truth intermediate data (6i, 6i', 6i", 6i"', 6i"") and said intermediate perception data (4i, 4i', 4i", 4i"', 4iʺʺ), wherein said range of perception data (4) comprises perception data of a surrounding object (7, 7', 7"), said accuracy deviation measure reflecting a measure in view of said object (7, 7', 7") which evaluates performance and/or failure or failure risk of the at least one of said one or more surrounding detecting sensors sensing the perception data; and
***communicating*** (1004) acknowledgement data (8) indicative of, reflecting and/or comprising at least said accuracy deviation measure, when said accuracy deviation measure exceeds a performance threshold.

2. The method according to claim 1, wherein said ***communicating*** (1004) acknowledgement data (8) comprises:
transmitting said acknowledgement data (8) wirelessly to a remote entity (9), said acknowledgement data (8) comprising said range of perception data (4), and/or
transmitting said acknowledgement data (8) to an on-board feature control system (22) adapted to control said ADAS or autonomous driving feature (3), said acknowledgement data (8) comprising an indication to disable said ADAS or autonomous driving feature (3).

3. The method according to claim 1 or 2, further comprising:
***communicating*** (1005), when said accuracy deviation measure exceeds a further performance threshold, further acknowledgement data (80), said performance threshold deviating from said further performance threshold.

4. The method according to claim 3 in combination with claim 2, wherein said ***communicating*** (1005) further acknowledgement data comprises:
transmitting said further acknowledgement data (80) wirelessly to said remote entity (9), said further acknowledgement data (80) comprising said range of perception data (4), or
transmitting said further acknowledgement data (80) to said feature control system (22), said further acknowledgement data (80) comprising an indication to disable said ADAS or autonomous driving feature (3).

5. The method according to any one of the preceding claims, wherein said accuracy deviation measure reflects a measure in view of estimated safety assessment on which said ADAS or autonomous driving feature (3) is pertinent.

6. A **field monitor system** (1) of a vehicle (2) for performance monitoring and evaluation of an advanced driver-assistance system, ADAS, or autonomous driving feature (3) of said vehicle (2), said field monitor system (1) comprising:
a **perception data storing unit** (101) for ***storing*** (1001), during a time period (T) ranging from a first time point (t₁) to a second time point (t₂), a range of perception data (4) on which said ADAS or autonomous driving feature (3) is pertinent derived from a perception system (21) adapted to estimate surroundings of said vehicle (2);
a **ground truth determining unit** (102) for ***determining*** (1002) based on post-processing comprising backward-processing a portion (40) of said range of perception data (4) ranging back from said second time point (t₂) to an intermediate time point (t_{intermediate}) between said first and second time points (t₁, t₂), ground truth intermediate data (6i, 6i', 6i", 6i"', 6iʺʺ) at said intermediate time point (t_{intermediate}), said ground truth intermediate data (6i, 6i', 6i", 6i"', 6iʺʺ) reflecting estimates of vehicle surroundings at said intermediate time point (t_{intermediate}) conditional on i.e. based on post-processing of data comprised in said portion (40) of the range of perception data (4);
a **deviation determining unit** (103) for ***determining*** (1003) based on analysis of said ground truth intermediate data (6i, 6i', 6i", 6i"', 6iʺʺ) in view of intermediate perception data (4i, 4i', 4i", 4i"', 4i"") out of said range of perception data (4) corresponding to said intermediate time point (t_{intermediate}), an accuracy deviation measure indicating deviation between said ground truth intermediate data (6i, 6i', 6i", 6i"', 6iʺʺ) and said intermediate perception data (4i, 4i', 4i", 4i"', 4i""), wherein said range of perception data (4) comprises perception data of a surrounding object (7, 7', 7"), said accuracy deviation measure reflecting a measure in view of said object (7, 7', 7") which evaluates performance and/or failure or failure risk of the at least one of said one or more surrounding detecting sensors sensing the perception data; and
an **acknowledgement communicating unit** (104) for ***communicating*** (1004) acknowledgement data (8) indicative of, reflecting and/or comprising at least said accuracy deviation measure, when said accuracy deviation measure exceeds a performance threshold.

7. The field monitor system (1) according to claim 6, wherein said acknowledgement communicating unit (104) is adapted for:
transmitting said acknowledgement data (8) wirelessly to a remote entity (9), said acknowledgement data (8) comprising said range of perception data (4), and/or
transmitting said acknowledgement data (8) to an on-board feature control system (22) adapted to control said ADAS or autonomous driving feature (3), said acknowledgement data (8) comprising an indication to disable said ADAS or autonomous driving feature (3).

8. The field monitor system (1) according to claim 6 or 7, wherein said acknowledgement communicating unit (104) further is adapted for:
***communicating*** (1005), when said accuracy deviation measure exceeds a further performance threshold, further acknowledgement data (80), said performance threshold deviating from said further performance threshold.

9. The field monitor system (1) according to claim 8 in combination with claim 7,
wherein said acknowledgement communicating unit (104) further is adapted for:
transmitting said further acknowledgement data (80) wirelessly to said remote entity (9), said further acknowledgement data (80) comprising said range of perception data (4), or
transmitting said further acknowledgement data (80) to said feature control system (22), said further acknowledgement data (80) comprising an indication to disable said ADAS or autonomous driving feature (3).

10. The field monitor system (1) according to any one of claims 6-9, wherein said accuracy deviation measure reflects a measure in view of estimated safety assessment on which said ADAS or autonomous driving feature is pertinent (3).

11. A vehicle (2) supporting an ADAS or autonomous driving feature (3), and comprising a field monitor system (1) according to any one of claims 6-10.

12. A computer program product comprising a computer program containing computer program code means arranged to cause a computer or a processor to execute the steps of a method according to any of claims 1-5, stored on a computer-readable medium or a carrier wave.

13. A non-volatile computer readable storage medium having stored thereon the computer program product of claim 12.

## Patentansprüche

1. Verfahren, das von einem Feldüberwachungssystem (1) eines Fahrzeugs (2) zur Leistungsüberwachung und -beurteilung eines fortschrittlichen Fahrerassistenzsystems-, ADAS-, oder autonomen Fahrmerkmals (3) des Fahrzeugs (2) durchgeführt wird, das Verfahren umfassend:
***Speichern*** (1001), während eines Zeitraums (T), der von einem ersten Zeitpunkt (t₁) bis zu einem zweiten Zeitpunkt (t₂) reicht, eines Bereichs von Wahrnehmungsdaten (4), auf die das ADAS- oder autonome Fahrmerkmal (3) anwendbar ist, abgeleitet von einem Wahrnehmungssystem (21), das geeignet ist, die Umgebung des Fahrzeugs (2) abzuschätzen;
***Bestimmen*** (1002) auf der Grundlage einer Nachverarbeitung, die ein Rückwärtsverarbeiten eines Teils (40) des Bereichs von Wahrnehmungsdaten (4) umfasst, der sich von dem zweiten Zeitpunkt (t₂) bis zu einem Zwischenzeitpunkt (t_{zwischen}) zwischen dem ersten und dem zweiten Zeitpunkt (t₁) zurück erstreckt, t₂), von Grundwahrheits-Zwischendaten (6i, 6i', 6i", 6i"', 6iʺʺ) zu dem Zwischenzeitpunkt (t_{zwischen}), wobei die Grundwahrheits-Zwischendaten (6i, 6i', 6i", 6i"', 6iʺʺ) Schätzungen der Fahrzeugumgebung zu dem Zwischenzeitpunkt (t_{zwischen}) unter der Bedingung von, d. h., auf der Grundlage der Nachverarbeitung von Daten widerspiegeln, die in dem Teil (40) des Bereichs der Wahrnehmungsdaten (4) enthalten sind;
***Bestimmen*** (1003) auf der Grundlage der Analyse der Grundwahrheits-Zwischendaten (6i, 6i', 6i", 6i"', 6iʺʺ) im Hinblick auf die Zwischenwahrnehmungsdaten (4i, 4i', 4i", 4i"', 4iʺʺ) aus dem Bereich der Wahrnehmungsdaten (4), die dem Zwischenzeitpunkt (t_{zwischen}) entsprechen, eines Genauigkeitsabweichungsmaßes, das die Abweichung zwischen den Grundwahrheits-Zwischendaten (6i, 6i', 6i", 6i"', 6iʺʺ) und den Zwischenwahrnehmungsdaten (4i, 4i', 4i", 4i‴, 4iʺʺ) anzeigt, wobei der Bereich der Wahrnehmungsdaten (4) Wahrnehmungsdaten eines umgebenden Objekts (7, 7', 7") umfasst, wobei das Genauigkeitsabweichungsmaß ein Maß im Hinblick auf das Objekt (7, 7', 7") widerspiegelt, das die Leistung und/oder den Ausfall oder das Ausfallrisiko des mindestens einen des einen oder der mehreren umgebenden Erfassungssensoren, die die Wahrnehmungsdaten erfassen, bewertet; und
***Kommunizieren*** (1004) von Bestätigungsdaten (8), die zumindest das Genauigkeitsabweichungsmaß anzeigen, widerspiegeln und/oder umfassen, wenn das Genauigkeitsabweichungsmaß eine Leistungsschwelle überschreitet.

2. Verfahren nach Anspruch 1, wobei das ***Kommunizieren*** (1004) von Bestätigungsdaten (8) umfasst:
drahtloses Übertragen der Bestätigungsdaten (8) an eine entfernte Einheit (9), wobei die Bestätigungsdaten (8) den Bereich der Wahrnehmungsdaten (4) umfassen, und/oder
Übertragen der Bestätigungsdaten (8) an ein bordeigenes Merkmalssteuersystem (22), das ausgelegt ist, das ADAS- oder autonome Fahrmerkmal (3) zu steuern, wobei die Bestätigungsdaten (8) eine Angabe zur Deaktivierung des ADAS- oder autonomen Fahrmerkmals (3) umfassen.

3. Verfahren nach Anspruch 1 oder 2, weiter umfassend:
***Kommunizieren*** (1005) weiterer Bestätigungsdaten (80), wenn das Genauigkeitsabweichungsmaß eine weitere Leistungsschwelle überschreitet, wobei die Leistungsschwelle von der weiteren Leistungsschwelle abweicht.

4. Verfahren nach Anspruch 3 in Kombination mit Anspruch 2, wobei das ***Kommunizieren*** (1005) weiterer Bestätigungsdaten umfasst:
drahtloses Übertragen der weiteren Bestätigungsdaten (80) an die entfernte Einheit (9), wobei die weiteren Bestätigungsdaten (80) den Bereich von Wahrnehmungsdaten (4) umfassen, oder
Übertragen der weiteren Bestätigungsdaten (80) an das Merkmalssteuersystem (22), wobei die weiteren Bestätigungsdaten (80) eine Anzeige zur Deaktivierung des ADAS- oder autonomen Fahrmerkmals (3) umfassen.

5. Verfahren nach einem der vorstehenden Ansprüche, wobei das Maß der Genauigkeitsabweichung ein Maß im Hinblick auf die geschätzte Sicherheitsbewertung widerspiegelt, auf die das ADAS- oder autonome Fahrmerkmal (3) anwendbar ist.

6. **Feldüberwachungssystem** (1) eines Fahrzeugs (2) zur Leistungsüberwachung und -beurteilung eines fortschrittlichen Fahrerassistenzsystems-, ADAS-, oder autonomen Fahrmerkmals (3) des Fahrzeugs (2), das Feldüberwachungssystem (1) umfassend:
eine **Wahrnehmungsdaten-Speichereinheit** (101) zum ***Speichern*** (1001), während eines Zeitraums (T), die von einem ersten Zeitpunkt (t₁) bis zu einem zweiten Zeitpunkt (t₂) reicht, eines Bereichs von Wahrnehmungsdaten (4), auf die sich das ADAS- oder autonome Fahrmerkmal (3) bezieht, das von einem Wahrnehmungssystem (21) abgeleitet ist, das dafür ausgelegt ist, die Umgebung des Fahrzeugs (2) abzuschätzen;
eine **Grundwahrheitsbestimmungseinheit** (102) zur ***Bestimmung*** (1002) auf der Grundlage einer eine Rückwärtsverarbeitung umfassenden Nachbearbeitung eines Teils (40) des Bereichs von Wahrnehmungsdaten (4), der von dem zweiten Zeitpunkt (t₂) bis zu einem Zwischenzeitpunkt (t_{zwischen}) zwischen dem ersten und zweiten Zeitpunkt (t₁, t₂) zurückreicht, Grundwahrheits-Zwischendaten (6i, 6i', 6i", 6i"', 6iʺʺ) zu dem Zwischenzeitpunkt (t_{zwischen}), wobei die Grundwahrheits-Zwischendaten (6i, 6i', 6i", 6i"', 6iʺʺ) Schätzungen der Fahrzeugumgebung zu dem Zwischenzeitpunkt (t_{zwischen}) widerspiegeln, bedingt durch, d. h., basierend auf der Nachverarbeitung von Daten, die in dem Teil (40) des Bereichs der Wahrnehmungsdaten (4) enthalten sind;
eine **Abweichungsbestimmungseinheit** (103) zum ***Bestimmen*** (1003) basierend auf der Analyse der Grundwahrheits-Zwischendaten (6i, 6i', 6i", 6i"', 6iʺʺ) im Hinblick auf die Zwischenwahrnehmungsdaten (4i, 4i', 4i", 4i"', 4i"') außerhalb des Bereichs der Wahrnehmungsdaten (4), die dem Zwischenzeitpunkt (t_{zwischen}) entsprechen, eines Genauigkeitsabweichungsmaßes, das die Abweichung zwischen den Grundwahrheits-Zwischendaten (6i, 6i', 6i", 6i"', 6iʺʺ) und den Zwischenwahrnehmungsdaten (4i, 4i', 4i", 4i"', 4iʺʺ) anzeigt, wobei der Bereich der Wahrnehmungsdaten (4) Wahrnehmungsdaten eines umgebenden Objekts (7, 7', 7") umfasst, wobei das Genauigkeitsabweichungsmaß ein Maß im Hinblick auf das Objekt (7, 7', 7") widerspiegelt, das die Leistung und/oder den Ausfall oder das Ausfallrisiko des mindestens einen des einen oder der mehreren umgebenden Erfassungssensoren, die die Wahrnehmungsdaten erfassen, bewertet; und
eine **Bestätigungs-Kommunikationseinheit** (104) zum ***Kommunizieren*** (1004) von Bestätigungsdaten (8), die zumindest das Genauigkeitsabweichungsmaß anzeigen, widerspiegeln und/oder umfassen, wenn das Genauigkeitsabweichungsmaß eine Leistungsschwelle überschreitet.

7. Feldüberwachungssystem (1) nach Anspruch 6, wobei die Bestätigungs-Kommunikationseinheit (104) ausgelegt ist zum:
drahtlosen Übertragen der Bestätigungsdaten (8) an eine entfernte Einheit (9), wobei die Bestätigungsdaten (8) den Bereich der Wahrnehmungsdaten (4) umfassen, und/oder
Übertragen der Bestätigungsdaten (8) an ein bordeigenes Merkmalssteuersystem (22), das ausgelegt ist, das ADAS- oder autonome Fahrmerkmal (3) zu steuern, wobei die Bestätigungsdaten (8) eine Angabe zur Deaktivierung des ADAS- oder autonomen Fahrmerkmals (3) umfassen.

8. Feldüberwachungssystem (1) nach Anspruch 6 oder 7, wobei die Bestätigungs-Kommunikationseinheit (104) weiter ausgelegt ist zum:
***Kommunizieren*** (1005) weiterer Bestätigungsdaten (80), wenn das Genauigkeitsabweichungsmaß eine weitere Leistungsschwelle überschreitet, wobei die Leistungsschwelle von der weiteren Leistungsschwelle abweicht.

9. Feldüberwachungssystem (1) nach Anspruch 8 in Kombination mit Anspruch 7, wobei die Bestätigungs-Kommunikationseinheit (104) weiter ausgelegt ist zum:
drahtlosen Übertragen der weiteren Bestätigungsdaten (80) an die entfernte Einheit (9), wobei die weiteren Bestätigungsdaten (80) den Bereich von Wahrnehmungsdaten (4) umfassen, oder
Übertragen der weiteren Bestätigungsdaten (80) an das Merkmalssteuersystem (22), wobei die weiteren Bestätigungsdaten (80) eine Anzeige zur Deaktivierung des ADAS- oder autonomen Fahrmerkmals (3) umfassen.

10. Feldüberwachungssystem (1) nach einem der Ansprüche 6-9, wobei das Genauigkeitsabweichungsmaß ein Maß im Hinblick auf die geschätzte Sicherheitsbewertung widerspiegelt, auf die das ADAS- oder autonome Fahrmerkmal anwendbar ist (3).

11. Fahrzeug (2), das ein ADAS- oder autonome Fahrmerkmal (3) unterstützt und ein Feldüberwachungssystem (1) nach einem der Ansprüche 6-10 umfasst.

12. Computerprogrammprodukt, umfassend ein Computerprogramm, das Computerprogrammcodemittel enthält, die so ausgebildet sind, dass sie einen Computer oder einen Prozessor veranlassen, die Schritte eines Verfahrens nach einem der Ansprüche 1 bis 5 auszuführen, die auf einem computerlesbaren Medium oder einer Trägerwelle gespeichert sind.

13. Nichtflüchtiges computerlesbares Speichermedium, auf dem das Computerprogrammprodukt nach Anspruch 12 gespeichert ist.

## Revendications

1. Procédé effectué par un système de surveillance sur le terrain (1) d'un véhicule (2) pour le contrôle des performances et l'évaluation d'une fonction de système avancé d'aide à la conduite, ADAS, ou de conduite autonome (3) dudit véhicule (2), ledit procédé comprenant :
***le stockage*** (1001), pendant une période de temps (T) allant d'un premier point temporel (t₁) à un second point temporel (t₂), d'une plage de données de perception (4) sur laquelle ladite fonction ADAS ou de conduite autonome (3) est pertinente, obtenues à partir d'un système de perception (21) conçu pour estimer l'environnement dudit véhicule (2) ;
***la détermination*** (1002) sur la base d'un post-traitement comprenant le traitement à rebours d'une partie (40) de ladite plage de données de perception (4) remontant dudit second point temporel (t₂) à un point temporel intermédiaire (t_{intermédiaire}) entre lesdits premier et second points temporels (t₁, t₂), de données intermédiaires de vérité de terrain (6i, 6i', 6i", 6i"', 6i"") audit point temporel intermédiaire (t_{intermédiaire}), lesdites données intermédiaires de vérité de terrain (6i, 6i', 6i", 6i"', 6i"") reflétant des estimations d'environnement de véhicule audit point temporel intermédiaire (t_{intermédiaire}), conditionnellement à, c'est-à-dire, sur la base d'un post-traitement de données comprises dans ladite partie (40) de la plage de données de perception (4) ;
***la détermination*** (1003) sur la base de l'analyse desdites données intermédiaires de vérité de terrain (6i, 6i', 6i", 6i"', 6i"") au vu de données de perception intermédiaires (4i, 4i', 4i", 4i"', 4i"") hors de ladite plage de données de perception (4) correspondant audit point temporel intermédiaire (t_{intermediate}), d'une mesure d'écart de précision indiquant l'écart entre lesdites données intermédiaires de vérité de terrain (6i, 6i', 6i", 6i"', 6i"") et lesdites données de perception intermédiaires (4i, 4i', 4i", 4i"', 4i""), dans lequel ladite plage de données de perception (4) comprend des données de perception d'un objet environnant (7, 7', 7"), ladite mesure d'écart de précision reflétant une mesure au vu dudit objet (7, 7', 7") qui évalue la performance et/ou la défaillance ou le risque de défaillance de l'au moins un dudit ou desdits capteurs de détection environnants captant les données de perception ; et
***la communication*** (1004) de données d'accusé de réception (8) indiquant, reflétant et/ou comprenant au moins ladite mesure d'écart de précision, lorsque ladite mesure d'écart de précision dépasse un seuil de performance.

2. Procédé selon la revendication 1, dans lequel ladite ***communication*** (1004) de données d'accusé de réception (8) comprend :
la transmission desdites données d'accusé de réception (8) sans fil à une entité distante (9), lesdites données d'accusé de réception (8) comprenant ladite plage de données de perception (4), et/ou
la transmission desdites données d'accusé de réception (8) à un système de commande de fonctions embarqué (22) conçu pour commander ladite fonction ADAS ou de conduite autonome (3), lesdites données d'accusé de réception (8) comprenant une indication pour désactiver ladite fonction ADAS ou de conduite autonome (3).

3. Procédé selon la revendication 1 ou 2, comprenant en outre :
***la communication*** (1005), lorsque la mesure d'écart de précision dépasse un autre seuil de performance, d'autres données d'accusé de réception (80), ledit seuil de performance s'écartant dudit autre seuil de performance.

4. Procédé selon la revendication 3 en combinaison avec la revendication 2, dans lequel ladite ***communication*** (1005) d'autres données d'accusé de réception comprend :
la transmission desdites autres données d'accusé de réception (80) sans fil à ladite entité distante (9), lesdites autres données d'accusé de réception (80) comprenant ladite plage de données de perception (4), ou
la transmission desdites autres données d'accusé de réception (80) au système de commande de fonctions (22), lesdites autres données d'accusé de réception (80) comprenant une indication de désactivation de ladite fonction ADAS ou de conduite autonome (3).

5. Procédé selon l'une quelconque des revendications précédentes, dans lequel, la mesure d'écart de précision reflète une mesure au vu de l'évaluation de sécurité estimée sur laquelle ladite fonction ADAS ou de conduite autonome (3) est pertinente.

6. Système **de surveillance sur le terrain** (1) d'un véhicule (2) pour le contrôle des performances et l'évaluation d'une fonction de système avancé d'aide à la conduite, ADAS, ou de conduite autonome (3) dudit véhicule (2), ledit système de surveillance (1) comprenant :
une **unité de stockage de données de perception** (101) pour ***stocker*** (1001)*,* pendant une période de temps (T) allant d'un premier point temporel (t₁) à un second point temporel (t₂), une plage de données de perception (4) sur laquelle ladite fonction ADAS ou de conduite autonome (3) est pertinente, obtenues à partir d'un système de perception (21) conçu pour estimer l'environnement dudit véhicule (2) ;
une **unité de détermination de vérité de terrain** (102) pour ***déterminer*** (1002) sur la base d'un post-traitement comprenant un traitement à rebours d'une partie (40) de ladite plage de données de perception (4) remontant dudit second point temporel (t₂) à un point temporel intermédiaire (t_{intermédiaire}) entre lesdits premier et second points temporels (t₁, t₂), des données intermédiaires de vérité de terrain (6i, 6i', 6i", 6i"', 6i"") audit point temporel intermédiaire (t_{intermédiaire}), lesdites données intermédiaires de vérité de terrain (6i, 6i', 6i", 6i"', 6i"") reflétant des estimations d'environnement de véhicule audit point temporel intermédiaire (t_{intermédiaire}), conditionnellement à, c'est-à-dire, sur la base d'un post-traitement des données comprises dans ladite partie (40) de la plage de données de perception (4) ;
une **unité de détermination d'écart**(103) pour ***déterminer*** (1003) sur la base de l'analyse desdites données intermédiaires de vérité de terrain (6i, 6i', 6i", 6i"', 6i"") au vu de données de perception intermédiaires (4i, 4i', 4i", 4i"', 4i"") hors de ladite plage de données de perception (4) correspondant audit point temporel intermédiaire (t_{intermédiaire}), une mesure d'écart de précision indiquant l'écart entre lesdites données intermédiaires de vérité de terrain (6i, 6i', 6i", 6i"', 6i"") et lesdites données de perception intermédiaires (4i, 4i', 4i", 4i"', 4i""), dans lequel ladite plage de données de perception (4) comprend des données de perception d'un objet environnant (7, 7', 7"), ladite mesure d'écart de précision reflétant une mesure au vu dudit objet (7, 7', 7") qui évalue la performance et/ou la défaillance ou le risque de défaillance de l'au moins un dudit ou desdits capteurs de détection environnants captant les données de perception ; et
une **unité de communication d'accusé de réception** (104) pour ***communiquer*** (1004) des données d'accusé de réception (8) indiquant, reflétant et/ou comprenant au moins ladite mesure d'écart de précision, lorsque ladite mesure d'écart de précision dépasse un seuil de performance.

7. Système de surveillance de terrain (1) selon la revendication 6, dans lequel ladite unité de communication d'accusé de réception (104) est conçue pour :
transmettre lesdites données d'accusé de réception (8) sans fil à une entité distante (9), lesdites données d'accusé de réception (8) comprenant ladite plage de données de perception (4), et/ou
transmettre lesdites données d'accusé de réception (8) à un système de commande de fonctions embarqué (22) conçu pour commander ladite fonction ADAS ou de conduite autonome (3), lesdites données d'accusé de réception (8) comprenant une indication pour désactiver ladite fonction ADAS ou de conduite autonome (3).

8. Système de surveillance de terrain (1) selon la revendication 6 ou 7, dans lequel ladite unité de communication d'accusé de réception (104) est en outre conçue pour :
***communiquer*** (1005), lorsque la mesure d'écart de précision dépasse un autre seuil de performance, d'autres données d'accusé de réception (80), ledit seuil de performance s'écartant dudit autre seuil de performance.

9. Système de surveillance de terrain (1) selon la revendication 8 en combinaison avec la revendication 7, dans lequel ladite unité de communication d'accusé de réception (104) est en outre conçue pour :
transmettre lesdites autres données d'accusé de réception (80) sans fil à ladite entité distante (9), lesdites autres données d'accusé de réception (80) comprenant ladite plage de données de perception (4), ou
transmettre lesdites autres données d'accusé de réception (80) au système de commande de fonctions (22), lesdites autres données d'accusé de réception (80) comprenant une indication de désactivation de ladite fonction ADAS ou de conduite autonome (3).

10. Système de surveillance de terrain (1) selon l'une quelconque des revendications 6 à 9, dans lequel la mesure d'écart de précision reflète une mesure au vu de l'évaluation de sécurité estimée sur laquelle la fonction ADAS ou de conduite autonome est pertinente (3).

11. Véhicule (2) prenant en charge une fonction ADAS ou de conduite autonome (3), et comprenant un système de surveillance de terrain (1) selon l'une quelconque des revendications 6 à 10.

12. Produit de programme d'ordinateur comprenant un programme d'ordinateur contenant des moyens de code de programme d'ordinateur conçus pour amener un ordinateur ou un processeur à exécuter les étapes d'un procédé selon l'une quelconque des revendications 1 à 5, stocké sur un support lisible par ordinateur ou une onde porteuse.

13. Support de stockage lisible par ordinateur non volatil sur lequel est stocké le produit de programme d'ordinateur selon la revendication 12.
